# EUROPEAN PATENT SPECIFICATION

(11) **EP 1 733 910 B1**
(45) Date of publication and mention of the grant of the patent: **25.01.2012**
(21) Application number: 06115522.2
(22) Date of filing: 15.06.2006
(51) Int. Cl.: B60K 6/12

(54) **Urban vehicle and energy recovery device for said vehicle**
Stadtbus mit Energierückgewinnung
Bus urbain avec récupération d'énergie

(30) Priority: 15.06.2005 FR 0506062
(43) Date of publication of application: 20.12.2006
(73) Proprietor: Iveco France S.A., 69200 Vénissieux (FR)
(72) Inventor: Desneux, Alexandre, 38460 Chamagnieu (FR)
(74) Representative: Borsano, Corrado

(56) References cited:
- EP-A2- 1 488 948
- WO-A-2004/026607
- WO-A2-2004/058550
- DE-A1- 4 224 075
- US-A- 2 544 606
- US-A- 5 540 299
- US-A- 5 971 092
- US-B1- 6 170 587

## Description

This invention concerns an urban vehicle and an energy recovery device for said vehicle.

Urban vehicles exist, such as buses, equipped with:
- a reversible energy recovery device, which consists of:

- at least one rechargeable hydraulic accumulator, containing a pressurised fluid, and able to store hydraulic energy in the form of hydrostatic energy and return hydraulic energy from the stored hydrostatic energy,
- an additional reversible hydraulic motor equipped with a rotating drive shaft, of at least one of the vehicle's wheels, this motor being suitable for transforming the hydraulic energy returned by the accumulator into a mechanical energy to drive in rotation the shaft and, alternately, to transform the mechanical energy rotating the shaft driven by the wheel or each wheel into hydraulic energy transmitted to the accumulator to be stored there in the form of hydrostatic energy, and
- a device for propelling the vehicle that is able to drive in rotation the wheels of the vehicle, this device being mechanically independent from the energy recovery device.

The fact that the vehicle's propulsion device is mechanically independent from the energy recovery device makes it possible to maintain the propulsion of the vehicle even if the energy recovery device should fail.

Typically, the propulsion device includes a thermal motor equipped with an output shaft. This output shaft is mechanically coupled to the drive wheels by means of a reducer gear. In fact, the output shaft rotates at a much higher speed than the wheels.

In existing vehicles, the shaft of the hydraulic motor is directly driven in rotation by the output shaft of the thermal motor, and therefore itself turns at a much higher speed than the wheels. The drive shaft of the hydraulic motor is therefore also mechanically coupled to the wheels of the vehicle by means of a reducer gear to reduce the speed of rotation.

Said energy recovery device works correctly; however, its energy efficiency needs to be improved.

US5971092 discloses a hybrid vehicle provided with a first and a second internal combustion engines and a hydraulic device. The hydraulic device and the combustion engines are connected by a mechanical clutch and a chain drive to a final drive/differential which mechanically connects with driven wheels.

Also the two combustion engines are connected to the chain drive 51 by means of a one-way clutches having an output shaft 82 connected to the chain drive 51 through a transmission system 30.

The invention therefore aims to propose a vehicle equipped with an energy recovery device with an improved energy efficiency.

The invention therefore has as its object an urban vehicle in which the shaft of the hydraulic motor is directly mechanically coupled to the wheel, to turn at the same speed as the wheel when the shaft drives the wheel or vice versa.

In the aforesaid vehicle, the shaft of the hydraulic motor is directly coupled to the wheel, that is to say without the use of a rotation speed reducer gear. The shaft and the wheel therefore turn at the same speed when they are mechanically coupled to each other. In existing vehicles, the use of a reducer gear to connect the shaft of the hydraulic motor to the wheels necessarily implied energy wastage in the form of friction and heat inside the reducer gear. That being the case, the energy recovery device fitted on the aforesaid vehicle presents better energy efficiency, since energy losses through friction and heat are eliminated.

The embodiments of this vehicle can include one or several of the following characteristics:
- the propulsion device includes a traction motor equipped with an output shaft mechanically coupled to one or several drive wheels to drive them in rotation;
- the energy recovery device is uniquely adapted to be mechanically coupled to the non-driving wheel or wheels of the vehicle;
- the energy recovery device is uniquely adapted to be mechanically coupled to the drive wheel or wheels;
- the energy recovery device includes a controllable engagement/disengagement mechanism which can be switched between an open position in which the hydraulic motor's transformation of mechanical energy rotating the wheel into storable hydraulic energy is disabled, and a closed position in which the hydraulic motor's transformation of mechanical rotation energy of the wheel into storable hydraulic energy is activated;
- the energy recovery device includes a control unit suitable for automatically controlling the opening of the engagement/disengagement mechanism when the vehicle's speed exceeds a preset threshold.

These embodiments of the vehicle also present the following advantages:
- mechanically coupling the shaft of the hydraulic motor to the non-driving wheels only simplifies the installation of the energy recovery device inside the vehicle;
- coupling the shaft of the hydraulic motor to the drive wheel or wheels makes it possible to install the energy recovery device in the same location as that of the propulsion device of the vehicle;
- the engagement/disengagement mechanism makes it possible to isolate the energy recovery device from the propulsion device, for example in the case of the failure of the energy recovery device;
- the automatic disengagement of the hydraulic motor beyond a certain speed threshold makes it possible to limit wear and the risk of damaging the hydraulic motor.

The invention also has as its object an energy recovery device adapted to be used in the aforementioned vehicle.

The invention will be more comprehensible by reading the following description, which is given purely as an example and in reference to the drawings, in which:
figure 1 is a schematic illustration of an urban vehicle equipped with an energy recovery device,
figure 2 is a diagram of an energy recovery process in action in the vehicle in figure 1, and
figure 3 is another embodiments of an urban vehicle equipped with an energy recovery device.

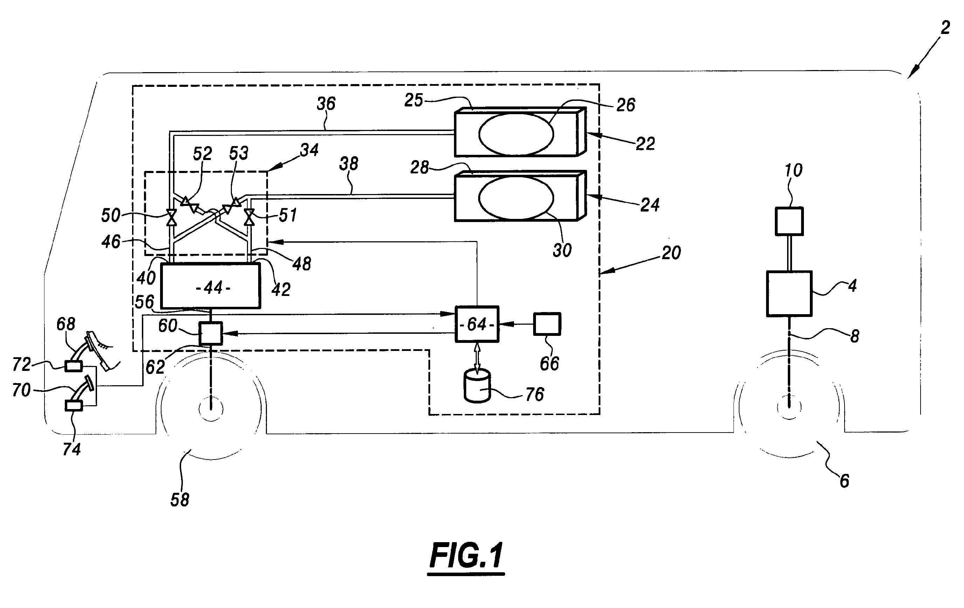

Figure 1 shows an urban vehicle 2 designed to travel in an urban environment in which numerous stops and starts are necessary in short spaces of time. Here, vehicle 2 is for example a public transport vehicle such as a bus.

Said vehicle 2 is equipped with a thermal propulsion device 4 suitable for driving in rotation the drive wheels. Only one drive wheel 6 is shown in figure 1.

The device 4 is, for example, a thermal motor, such as a diesel motor equipped with an output shaft 8 which is mechanically coupled by means of, among other things, a speed reducer gear, with wheel 6 to drive it in rotation.

The device 4 is connected to an energy source 10, here a fuel tank.

The vehicle 2 is also equipped with an energy recovery device 20 which allows, alternately, either to store the energy from the mechanical energy from the movement of the wheels of the vehicle 2, or on the contrary to return the mechanical energy to said wheels with the help of the energy previously stored. To this end, the device 20 includes a high pressure hydraulic accumulator 22 and a low pressure hydraulic accumulator 24.

Accumulator 22 also includes a non-deforming tank 25 inside which is situated a gas balloon 26. The gas is nitrogen, for example. The balloon 26 is arranged so that the pressure of the gas varies, for example, between 110 and 330 bars.

Outside balloon 26, the tank 25 contains an incompressible fluid under pressure, such as a liquid. Here that liquid is oil.

Accumulator 24 has a structure that is identical to that of accumulator 22, and therefore includes a non-deforming tank 28 inside which is situated a balloon 30. Balloon 30 is arranged here so that the pressure of the gas it contains varies between 3 and 20 bars, for example.

Said accumulators 22 and 24 are able to store hydraulic energy in the form of hydrostatic energy, and return hydraulic energy from the stored hydrostatic energy.

Accumulators 22 and 24 are hydraulically connected to a hydraulic switching device 34 by means of tubes 36 and 38 respectively.

The tubes 36 and 38 allow the fluid from the accumulators 22 and 24 respectively to be conveyed towards device 34 and vice versa.

Device 34 is also hydraulically connected to an outlet 40 and an inlet 42 of a reversible hydraulic motor 44 by means of tubes 46 and 48 respectively.

Device 34 makes it possible to hydraulically connect the outlet 40 and the inlet 42 respectively to tubes 36 and 38, and alternately, to tubes 38 and 36. The device 34 therefore makes it possible to cross and uncross the hydraulic connections between the hydraulic motor 44 and tubes 36 and 38. To this end, device 34 includes, for example, four controllable valves 50 and 53.

Valve 50 is directly connected on one side to tube 36 and on the other side to tube 46. Valve 51 is directly connected on one side to tube 38 and on the other side to tube 48.

Valve 52 is connected on one side to tube 36 and on the other side to tube 48 and valve 53 is connected on one side to tube 38 and on the other side to tube 46.

Hydraulic motors are commonly known and therefore the motor 44 will not be described in further detail. A description of a similar hydraulic motor can, for example, be found in the French patent application published under number FR 2834012.

Motor 44 is equipped with a shaft 56 that it can be mechanically coupled to the non-driving wheels of the vehicle 2. In figure 1, only one non-driving wheel 58 is shown.

A engagement/disengagement mechanism 60 is provided to directly couple the shaft 56 to a axle 62 of the wheel 58 and, alternately, to mechanically uncouple shaft 56 and axle 62. The mechanism 60 can be controlled.

Device 20 also has a control unit 64 for device 34 and the mechanism 60 depending here on the speed of the vehicle 2, measured by a sensor 66 and the positions of an acceleration pedal 68 and a brake pedal 70, measured respectively by position sensors 72 and 74.

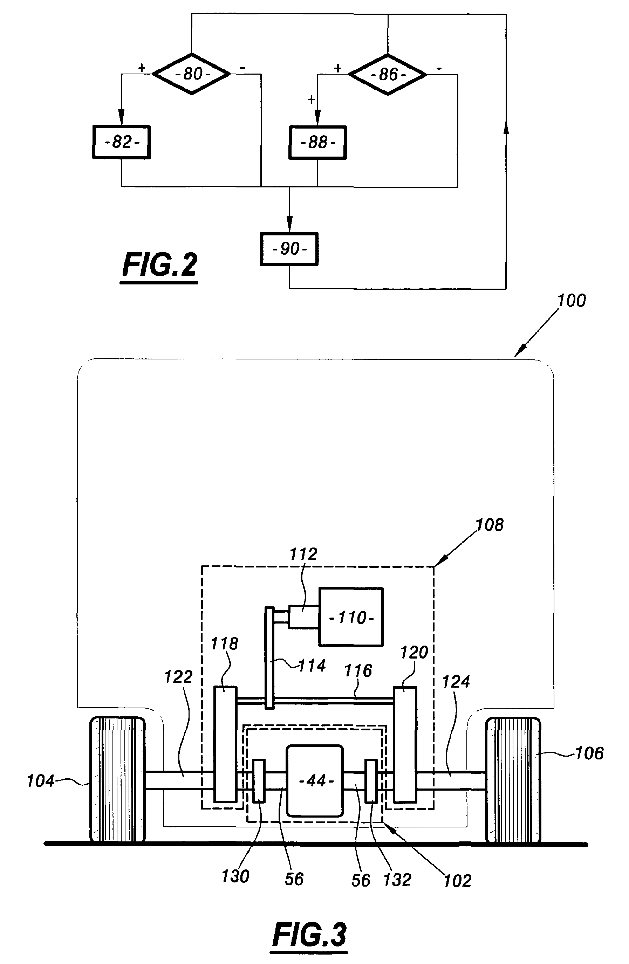

The unit 64 is, for example, made using programmable electronic computers that can carry out instructions recorded on a medium for recording information. To this end, the unit 64 is connected to a memory 76 which contains instructions for carrying out the process in figure 2.

The functioning of vehicle 2 shall now be described with regard to the process in figure 2.

After vehicle 2 is started up, device 4 drives the wheel 6 in rotation and vehicle 2 begins to travel. The turning of wheel 6 drives at the same time the turning of wheel 58, as they are both attached to the chassis of the vehicle 2 and are both in contact with the road surface.

When the driver of vehicle 2 puts down the brake pedal 70, in step 80, the computer 64 then checks that the vehicle is moving at a speed lower than a preset threshold S₁ and that the pressure inside the tank 25 is lower than 330 bars. Threshold S₁ is, for example, equal to or less than 40km/h. If that is the case, the process enters into an energy recovery phase 82. At the beginning of this phase, unit 64 controls the opening of valves 50 and 51 and the closure of valves 52 and 53. The closure of the mechanism 60 is also controlled to directly couple the shaft 56 to the axle 62. In such conditions, the shaft 56 turns at the same speed as the wheel 58. During the energy recovery phase, the device 20 functions as an energy accumulator. More specifically, the mechanical energy from the turning of wheel 58 drives shaft 56, which causes, through motor 44, the fluid in accumulator 24 to flow towards accumulator 22. Thus, the fluid stored in the tank 28 flows into tube 38, crosses valve 51, enters through inlet 42 into motor 44, come out through outlet 40, crosses the valve 50 before finally accumulating inside tank 25. The accumulation of fluid inside tank 25 takes place against the stress force exerted by balloon 26. Henceforth, the accumulator 22 stores the hydraulic energy related to the flowing of fluid in the form of hydrostatic energy. The more the pressure rises inside the tank 25, the greater the amount of hydrostatic energy stored.

Thus, during the energy recovery phase, the motor 44 turns the mechanical energy from the turning of the wheel 58 into hydraulic energy, and this hydraulic energy is stored in the form of hydrostatic energy inside the accumulator 22. This withdrawal of mechanical energy leads to a deceleration of the vehicle 2.

In parallel to steps 80 and 82, the unit 64 checks continuously, in step 86, whether:
- the driver has put down the acceleration pedal, and
- at the same time the speed of the vehicle 2 is lower than threshold S₁, and
- at the same time the pressure inside tank 25 is strictly above 110 bars.

If this is the case, the process enters an energy recovery phase 88. At the beginning of this phase 88, the unit 64 controls the closure of valves 50 and 51 and the opening of valves 52 and 53. Henceforth, the fluid stored under pressure in the accumulator 22 is propelled inside the tube 36, crosses the valve 52 and enters the motor 44 through the inlet 42. Next, the fluid flows out through the outlet 40, crosses the valve 53 and comes to accumulate inside the tank 28.

This displacement of fluid from one tank in which the pressure is higher towards another tank in which the pressure is lower is transformed into a movement of mechanical rotation of the shaft 56 by the motor 44.

At the same time, at the beginning of phase 88, the unit 64 controls the closure of the mechanism 60, so as to directly couple the shaft 56 to the axle 62.

Thus, the rotation movement of the shaft 56 is transmitted to the axle 62, which aids the propulsion of the vehicle 2.

When neither the acceleration pedal nor the brake pedal have been put down, or when the speed of the vehicle exceeds threshold S₁, or also if the pressure in one of the tanks 25, 28 has reached its minimal or maximal value, the computer 64 proceeds systematically to enter a rest phase 90. During said phase 90, the computer 64 controls the closure of all the valves 50 to 53 and the opening of the mechanism 60 in order to uncouple shaft 56 from axle 62.

During this rest phase, no fluid flows into tubes 36, 38, 46 and 48.

The accumulator 22 therefore conserves the stored hydrostatic energy in preparation for use later.

At the conclusion of step 90, the process returns to steps 80 and 86.

Figure 3 represents a vehicle 100 which corresponds to another embodiment of vehicle 2. The vehicle 100 differs from the vehicle 2 mainly in that it includes an energy recovery device 102 able to be directly mechanically coupled to the drive wheels 104, 106 of the vehicle 100.

The vehicle 100 has a propulsion device 108 of the vehicle 2. Said device 108 is equipped with a thermal motor 110 of which the output shaft is connected to the inlet of a gear box 112. A secondary shaft of the gear box drives by means of a belt 114 an input shaft 116 common to two differentials 118 and 120. The outlet of the differential 118 is mechanically coupled to an axle 122 of the wheel 104. One outlet of the differential 120 is mechanically coupled to an axle 124 of the wheel 106.

The differentials 118 and 120 have ratios between the speed of rotation of shaft 116 and the speed of rotation of shafts 122 and 124 respectively that differ by 1.

The energy recovery device 102 is, for example, identical to the device 20 except for the fact that the shaft 56 of hydraulic motor 44 is adapted to be directly mechanically coupled at the same time to axles 122 and 124, in such a way that the hydraulic motor 44 turns at the same speed as wheels 104 and 106.

In the particular case shown in figure 3, shaft 56 passes through motor 44 from one side to the other, the ends of the shaft 56 being connected respectively to the ends of the axles 122 and 124 by means of the respective engagement/disengagement mechanisms 130 and 132.

The mechanisms 130 and 132 are, for example, identical to mechanism 60 and also allow sliding if the axles 122 and 124 are not turning at the same speed.

The other elements of the device 102, such as the accumulators or the control unit, are identical to those described with regard to figure 1, and have not been shown in figure 3.

The functioning of vehicle 100 ensues from that described with regard to the process in figure 2 and will therefore not be described here in detail.

Numerous other embodiments are possible.

For example, the power source 10 could be placed outside the vehicle. This is, for example, the case when the vehicle 2 is a trolleybus which has a propulsion device having an electric motor powered by fixed cables by means of a pantograph.

The aforesaid information can also be applied to vehicles other than buses, such as tramcars, trains or electric motor vehicles for example.

As an alternative, the accumulators 22, 24 with gas balloons are substituted with spring-loaded hydraulic accumulators or with other types of hydraulic accumulator. In order to limit the space required for the device 20, it is possible to situate the hydraulic motor 44 inside the wheel and more specifically between the rim of the wheel 58 and axle 62. In this case, axle 62 is fixed and motor 44 directly drives the rim of wheel 58. The engagement/disengagement mechanism is then integrated into motor 44.

The engagement/disengagement mechanism 60 can be integrated into motor 44. In this case, for example, when mechanism 60 is open, inlet 42 is put directly into fluidic communication with outlet 40, and motor 44 freewheels. In such conditions, the turning of shaft 56 does not lead to any hydraulic circulation suitable for being stored by a hydraulic accumulator. Other engagement/disengagement mechanisms can be included to mechanically isolate the energy recovery device from the wheels.

## Claims

1. Urban vehicle (100) equipped with wheels, said vehicle comprising:
- a reversible energy recovery device (102) including:
at least one rechargeable hydraulic accumulator (22, 24) containing a pressurised fluid, and able to store hydraulic energy in the form of hydrostatic energy and to return hydraulic energy from the stored hydrostatic energy,
an additional reversible hydraulic motor (44) equipped with a drive shaft (56) driving in rotation at least two drive wheels (104, 106) of the vehicle, this motor being suitable for transforming the hydraulic energy returned by the accumulator into a mechanical energy for turning the shaft and, alternately, transforming the mechanical energy rotating the shaft driven by each wheel into hydraulic energy transmitted to the accumulator to be stored there in the form of hydrostatic energy, and
- a propulsion device (108) for propelling the vehicle that is able to drive in rotation the wheels of the vehicle, this device being mechanically independent from the energy recovery device (102),
**characterised in that** said propulsion device (108) is equipped with a thermal motor (110) or an electric motor connected by means of a belt (114) with an input shaft (116), common to two differentials (118, 120), the outlet of each differential (118, 120) being mechanically coupled to an axle (122, 124) of one of said drive wheels (104, 106); a shaft 56 passing through reversible hydraulic motor (44) from one side to the other, the ends of the shaft (56) being connected respectively to the ends of the axles (122, 124) of said drive wheel (104, 106) by means of the respective engagement/disengagement mechanisms (130, 132);
the shaft (56) of the hydraulic motor being directly mechanically coupled to the wheels to turn at the same speed as said wheels, while the shaft (56) drives the wheels or vice versa.

2. Urban vehicle according to claim 1, wherein the output shaft of said thermal motor (110) is connected to an inlet of a gear box (112) having a secondary shaft driving by means of said belt (114) said input shaft (116).

3. Urban vehicle according to claim 1, wherein said mechanisms (130, 132) are able to allow sliding if the axles (122, 124) of drive wheels (104, 106) are not turning at the same speed.

4. Vehicle according to claim 3, wherein said controllable engagement/disengagement mechanism (130, 132) can be switched between an open position in which the reversible hydraulic motor (44) transformation of mechanical energy from the turning wheels into storable hydraulic energy is disabled, and a closed position in which the reversible hydraulic motor (44) transformation of mechanical energy from the turning wheel into storable hydraulic energy is activated.

5. Vehicle according to claim 4, wherein the energy recovery device comprises a control unit (64) suitable for automatically controlling the opening of the engagement/disengagement mechanism when the vehicle's speed surpasses a preset threshold.

6. Urban vehicle according to claim 4, wherein said engagement/disengagement mechanisms (130, 132) is controlled by a control unit (64) depending on the speed of the vehicle (100), measured by a sensor (66) and the positions of an acceleration pedal (68) and a brake pedal (70), measured respectively by position sensors (72, 74).

## Patentansprüche

1. Stadtfahrzeug (100), das mit Rädern ausgestattet ist, wobei das Fahrzeug umfasst:
- eine reversible Energierückgewinnungseinrichtung (102), mit:
• zumindest einem wiederaufladbaren hydraulischen Speicher (22, 24), der ein Druckfluid enthält und in der Lage ist, hydraulische Energie in der Form von hydrostatischer Energie zu speichern und hydraulische Energie aus der gespeicherten hydrostatischen Energie zurückzugeben,
• einem zusätzlichen reversiblen Hydraulikmotor (44), der mit einer Antriebswelle (56) ausgestattet ist, die zumindest zwei Antriebsräder (104, 106) des Fahrzeugs rotatorisch antreibt, wobei dieser Motor zum Umwandeln der von dem Speicher zurückgegebenen hydraulischen Energie in eine mechanische Energie zum Drehen der Welle und alternativ zum Umwandeln der mechanischen Energie, die die von jedem Rad angetriebene Welle dreht, in hydraulische Energie, die zu dem Speicher zur Speicherung dort in der Form von hydrostatischer Energie übertragen wird, geeignet ist, und
- eine Vortriebseinrichtung (108) zum Vorantreiben des Fahrzeugs, die in der Lage ist, die Räder des Fahrzeugs rotatorisch anzutreiben, wobei diese Einrichtung von der Energierückgewinnungseinrichtung (102) mechanisch unabhängig ist,
**dadurch gekennzeichnet, dass**
die Vortriebseinrichtung (108) ausgestattet ist mit einem Wärmemotor (110) oder einem Elektromotor, der mittels eines Riemens (114) mit einer Eingangswelle (116), die von zwei Differenzialen (118, 120) gemeinsam genutzt wird, verbunden ist, der Abtrieb jedes Differentials (118, 120) mechanisch mit einer Achse (122, 124) von einem der Antriebsräder (104, 106) gekoppelt ist; und einer Welle (56), die durch den reversiblen Hydraulikmotor (44) von einer Seite zur anderen verläuft, wobei die Enden der Welle (56) jeweils mit den Enden der Achsen (122, 124) des Antriebsrades (104, 106) mittels der jeweiligen Einrückungs-/Ausrückungsmechanismen (130, 132) verbunden sind;
wobei die Welle (56) des Hydraulikmotors direkt mechanisch mit den Rädern gekoppelt ist, um mit der gleichen Drehzahl wie die Räder zu drehen, wobei die Welle (56) die Räder antreibt oder umgekehrt.

2. Stadtfahrzeug nach Anspruch 1,
wobei die Ausgangswelle des Wärmemotors (110) mit einem Einlass eines Getriebes (112) verbunden ist, das eine sekundäre Welle aufweist, die mittels des Riemens (114) die Eingangswelle (116) antreibt.

3. Stadtfahrzeug nach Anspruch 1,
wobei die Mechanismen (130, 132) in der Lage sind, ein Rutschen zuzulassen, wenn die Achsen (122, 124) der Antriebsräder (104, 106) nicht mit der gleichen Drehzahl drehen.

4. Fahrzeug nach Anspruch 3,
wobei der steuerbare Einrückungs-/Ausrückungsmechanismus (130, 132) zwischen einer offenen Stellung, in der die Umwandlung des reversiblen Hydraulikmotors (44) von mechanischer Energie von den drehenden Rädern in speicherbare hydraulische Energie gesperrt ist, und einer geschlossenen Stellung, in der die Umwandlung des reversiblen Hydraulikmotors (44) von mechanischer Energie von dem drehenden Rad in speicherbare hydraulische Energie aktiviert ist, umgeschaltet werden kann.

5. Fahrzeug nach Anspruch 4,
wobei die Energierückgewinnungseinrichtung eine Steuereinheit (64) umfasst, die zum automatischen Steuern des Öffnens des Einrückungs-/Ausrückungsmechanismus geeignet ist, wenn die Geschwindigkeit des Fahrzeugs einen vorgegebenen Schwellenwert überschreitet.

6. Stadtfahrzeug nach Anspruch 4,
wobei die Einrückungs-/Ausrückungsmechanismen (130, 132) durch eine Steuereinheit (64) abhängig von der Geschwindigkeit des Fahrzeugs (100), die von einem Sensor (66) gemessen wird, und den Stellungen eines Gaspedals (68) und eines Bremspedals (70), die jeweils durch Positionssensoren (72, 74) gemessen werden, gesteuert werden.

## Revendications

1. Véhicule urbain (100) équipé de roues, ledit véhicule comprenant :
- un dispositif de récupération d'énergie réversible (102) comprenant :
-- au moins un accumulateur hydraulique rechargeable (22, 24) contenant un fluide sous pression, et pouvant stocker de l'énergie hydraulique sous la forme d'énergie hydrostatique et de renvoyer de l'énergie hydraulique à partir de l'énergie hydrostatique stockée,
-- un moteur hydraulique réversible additionnel (44) équipé d'un arbre d'entraînement (56) entraînant en rotation au moins deux roues motrices (104, 106) du véhicule, ce moteur étant adapté pour transformer l'énergie hydraulique renvoyée par l'accumulateur en une énergie mécanique pour faire tourner l'arbre et, alternativement, transformer l'énergie mécanique faisant tourner l'arbre entraîné par chaque roue en énergie hydraulique transmise à l'accumulateur pour y être stockée sous la forme d'énergie hydrostatique, et
- un dispositif de propulsion (108) pour propulser le véhicule qui peut entraîner en rotation les roues du véhicule, ce dispositif étant mécaniquement indépendant du dispositif de récupération d'énergie (102),
**caractérisé en ce que** ledit dispositif de propulsion (108) est équipé d'un moteur thermique (110) ou d'un moteur électrique raccordé au moyen d'une courroie (114) avec un arbre d'entrée (116), commun à deux différentiels (118, 120), la sortie de chaque différentiel (118, 120) étant mécaniquement couplée à un essieu (122, 124) de l'une desdites roues motrices (104, 106) ; un arbre (56) passant à travers le moteur hydraulique réversible (44) d'un côté à l'autre, les extrémités de l'arbre (56) étant raccordées respectivement aux extrémités des essieux (122, 124) de ladite roue motrice (104, 106) au moyen des mécanismes d'embrayage/débrayage (130, 132) respectifs ;
l'arbre (56) du moteur hydraulique étant directement mécaniquement couplé aux roues afin de tourner à la même vitesse que lesdites roues, pendant que l'arbre (56) entraîne les roues ou vice-versa.

2. Véhicule urbain selon la revendication 1, dans lequel l'arbre de sortie dudit moteur thermique (110) est raccordé à une sortie d'une boîte de vitesse (112) ayant un arbre secondaire entraînant au moyen de ladite courroie (114) ledit arbre d'entrée (116).

3. Véhicule urbain selon la revendication 1, dans lequel lesdits mécanismes (130, 132) sont capables de permettre un glissement si les essieux (122, 124) des roues motrices (104, 106) ne tournent pas à la même vitesse.

4. Véhicule selon la revendication 3, dans lequel ledit mécanisme d'embrayage/débrayage (130, 132) peut être commuté entre position ouverte dans laquelle la transformation de l'énergie mécanique provenant des roues en rotation en énergie stockable par le moteur hydraulique réversible (44) est désactivée, et une position fermée dans laquelle la transformation de l'énergie mécanique provenant de la roue en rotation en énergie stockable par le moteur hydraulique réversible (44) est activée.

5. Véhicule selon la revendication 4, dans lequel le dispositif de récupération d'énergie comprend une unité de commande (64) adaptée pour commander automatiquement l'ouverture du mécanisme d'embrayage/débrayage quand la vitesse du véhicule dépasse un seuil prédéterminé.

6. Véhicule urbain selon la revendication 4, dans lequel lesdits mécanismes d'embrayage/débrayage (130, 132) sont commandés par une unité de commande (64) en fonction de la vitesse du véhicule (100), mesurée par un capteur (66) et des positions d'une pédale d'accélération (68) et d'une pédale de frein (70), mesurées respectivement par des capteurs de position (72, 74).
